Europäisches Patentamt

European Patent Office

Office européen des brevets

(11) Veröffentlichungsnummer: **0 257 396**

**A1**

(12) **EUROPÄISCHE PATENTANMELDUNG**

(21) Anmeldenummer: 87111350.2

(22) Anmeldetag: 05.08.87

(51) Int. Cl.⁴: **H02P 7/62** , H02P 1/26

(30) Priorität: **18.08.86 DE 3627930**

(43) Veröffentlichungstag der Anmeldung:
**02.03.88 Patentblatt 88/09**

(84) Benannte Vertragsstaaten:
**CH DE GB LI SE**

(71) Anmelder: **Siemens Aktiengesellschaft Berlin und München**
**Wittelsbacherplatz 2**
**D-8000 München 2(DE)**

(72) Erfinder: **Blaschke, Felix, Dr.**
**Steinforststrasse 19**
**D-8520 Erlangen(DE)**
Erfinder: **Reng, Leonhard, Dipl.-Ing.**
**Georg-Krauss-Strasse 8**
**D-8520 Erlangen(DE)**

(54) **Verfahren und Vorrichtung zum Betrieb einer feldorientierten, von einem steuerbaren Umrichter gespeisten Drehfeldmaschine.**

㉗ Bei der feldorientierten Regelung einer Asynchronmaschine, deren Flußwinkel von einem Flußrechner aus Strom und Spannung als Integral der EMK berechnet wird, muß bereits beim Anlauf der Maschine der richtige Flußvektor zur Verfügung stehen. Hierzu wird an einer Eingabeeinrichtung (E1, E2) durch einen konstant vorgegebenen Anfangswinkel ($\phi$M0*) eine Achse (M$\phi$1) eines Modell-Koordinatensystems sowie die auf das Modell-Koordinatensystem bezogenen Komponenten (i0*, iM* = 0) eines zu dieser Achse parallelen Vektors bestimmt. Dieser wird bei erregter, aber stillstehender Maschine mittels des vom Flußrechner errechneten Feldwinkels ($\phi$s) zur Bildung der Umrichter-Steuer-größen ins Ständerkoordinatensystem überführt. Die Win-kelabweichung ($\phi$M0*-$\phi$s) des errechneten Feldwinkels vom Anfangswinkel wird durch einen Regler (CR) zur Korrektur des errechneten Feldwinkels verwendet. Bevor von der Ein-stelleinrichtung auf den betriebsmäßig vorgesehenen Sollwertgeber (RV) umgeschaltet wird, nimmt daher der errechnete Feldwinkel ($\phi$s) den Anfangswinkel ($\phi$M0*) an und die Regeleinrichtung erzwingt über den Umrichter einen hierzu parallelen Ständerstrom und Maschinenfluß. Gleichzeitig kann auch der zur Berechnung des Flusses verwendete Parameter des Ständerwiderstandes abgeglichen werden.

FIG 3

## Verfahren und Vorrichtung zum Betrieb einer feldorientierten, von einem steuerbaren Umrichter gespeisten Drehfeldmaschine

Die Erfindung betrifft ein Verfahren zum Betrieb einer feldorientierten, von einem steuerbaren Umrichter gespeisten Drehfeldmaschine mit den im Oberbegriff des Anspruchs 1 genannten Merkmalen sowie eine Vorrichtung mit den im Oberbegriff des Anspruchs 6 genannten Merkmalen.

Im folgenden werden die Spannungen oder Ströme an den Eingängen der Drehfeldmaschine sowie der Fluß durch Vektoren mit zwei Bestimmungsgrößen in einem mathematischen Koordinatensystem bezeichnet. Ein raumfestes, die Ständerwicklung kennzeichnendes Ständer-Koordinatensystem besitzt die kartesischen Achsen $\alpha1$ und $\alpha2$. Ein entsprechendes Polarkoordinatensystem beschreibt einen Vektor durch Betrag und Richtung ("Winkel"). Z.B. ist der Flußvektor mit dem Betrag $\psi$ und dem Winkel $\phi s$ gegenüber der $\alpha1$-Achse im kartesischen Ständerkoordinatensystem beschrieben durch das Zahlenpaar $\underline{\psi} = (\psi.\cos \phi s, \psi.\sin \phi s)$. Mittels $\phi s$ ist dann auch die feldparallele Achse $\phi1$ und die feldsenkrechte Achse $\phi2$ eines Feldkoordinatensystems festgelegt.

Die Zuordnung der beiden Bestimmungsgrößen (Komponenten) des Strom-bzw. Spannungsvektors zu den an drei Ständerwicklungen auftretenden Größen geschieht mittels 2/3-bzw. 3/2-Wandlern. Winkel werden vorzugsweise ebenfalls als Einheitsvektoren verarbeitet, z.B. ergibt sich für die Feldachse ($\phi1$-Achse) im Ständerkoordinatensystem der Vektor $\underline{\phi}s = (\cos \phi s, \sin \phi s)$. Er kann durch einen Vektoranalysator "VA" aus dem Flußvektor errechnet werden. Ein Vektor kann mittels eines Vektordrehers "VD" vom Ständerkoordinatensystem ins Feldkoordinatensystem oder umgekehrt transformiert werden, wobei der benötigte Transformationswinkel gleich dem Feldwinkel ist.

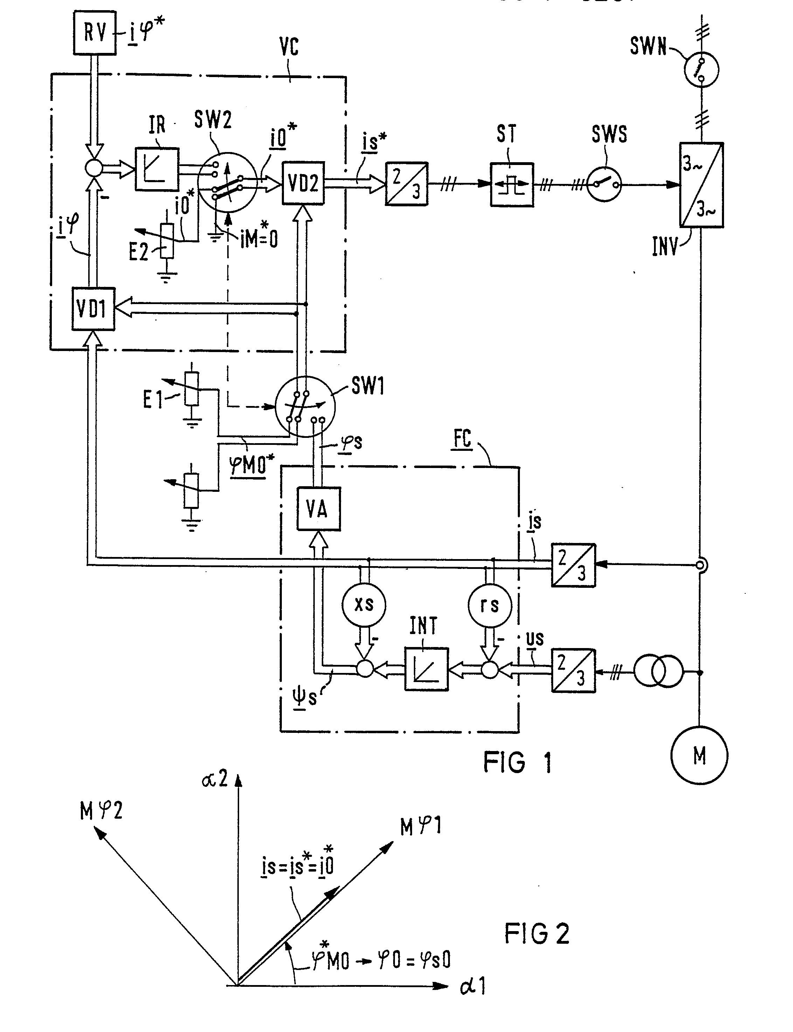

Kennzeichen des feldorientierten Betriebs der vorzugsweise verwendeten Asynchronmaschine ist, daß die Führungsgrößen oder Sollwerte für den Ständerstromvektor gemäß Figur 1 von einem Sollwertgeber RV als Vektor $\underline{i\phi}^*$ im Feldkoordinatensystem vorgegeben werden und der Umrichter mit ständerorientierten Steuergrößen, die einem Steuervektor $\underline{is}^*$ entsprechen und durch eine Stromregelung IR (Einzelregler für die Komponenten des Vektors oder für die ins 3-System transformierten Phasenströme) auf den durch die Führungsgrößen vorgegebenen Wert gebracht werden. Voraussetzung der Regelung ist dabei allerdings, daß die auszuregelnde Vektordifferenz aus Vektoren gebildet wird, die jeweils im gleichen Koordinatensystem dargestellt sind.

Bei der Anordnung nach Fig. 1 wird im Ständerkoordinatensystem aus dem Stromvektor $\underline{is}$ und dem Spannungsvektor $\underline{us}$ mittels eines Flußrechners FC zumindest der Winkel $\phi s$ gebildet. Dies kann vorzugsweise dadurch geschehen, daß der Spannungsvektor $\underline{us}$ nach Abzug des ohmschen Spannungsabfalls $rs \cdot \underline{is}$ vektoriell integriert und durch Abzug des integralen induktiven Spannungsabfalls $xs \cdot \underline{is}$ der Flußvektor $\underline{\psi}s$ gebildet wird, aus dem ein Vektoranalysator VA $\phi s$ errechnet

Die feldorientierte Regeleinrichtung VC arbeitet hier im Feldkoordinatensystem, wobei in der anderen, in Fig. 1 nicht dargestellten Schalterstellung der Umsteuereinrichtung SW1 und SW2 der Vektordreher VD1 den Ständerstromvektor $\underline{is}$ ins Feldkoordinatensystem (Vektor $\underline{i\phi}$) transformiert und die von der Stromregelung IR aus den Regelabweichungen der Komponenten gebildeten Größen mittels des Vektordrehers VD2 in Komponenten des ständerorientierten Steuervektors $\underline{is}^*$ für die Ansteuerung des Steuersatzes ST transformiert werden.

Der Flußrechner FC, der letztlich den Fluß $\underline{\phi}s$ als Integral eines entsprechenden Vektors $\underline{es}$ der EMK bildet, arbeitet nur dann befriedigend, wenn bei hinreichend hohen Frequenzen die induzierten Spannungen von relativ geringen Störungen überlagert sind. Außerdem müssen die Integratoren INT des Flußrechners beim Anlauf der Maschine bereits auf den Wert der wahren Flußkomponenten gesetzt werden, wenn die Vorteile der feldorientierten Regelung erreicht werden sollen.

Aus der E-B1-0015 501 ist es bekannt, hierzu die in Fig. 1 gezeigten Einstellmittel E1 und E2 sowie die Umsteuereinrichtung SW1 und SW2 zu verwenden. Eine nach diesem Prinzip entwickelte Vorrichtung zum Betrieb einer Drehfeldmaschine besitzt also einen Flußrechner, der aus elektrischen Meßwerten der Maschine den Feldwinkel der Maschine und damit den Richtungswinkel einer Achse eines kartesischen Feldkoordinatensystems errechnet, und eine Regeleinrichtung mit einem Eingabeeingang für den Feldwinkel, mit Mitteln zur Vorgabe von Führungsgrößen für die Komponenten des Ständerstromvektors im Feldkoordinatensystem, und mit einer Transformationseinrichtung, die aus den Führungsgrößen und dem Feldwinkel ständerorientierte Steuergrößen für den Umrichter liefert. Für den Start ist eine Start-Eingabeeinrichtung vorgesehen, die mittels E1 eine Anfangsrichtung $\phi M0^*$ für den Flußvektor der Drehfeldmaschine, die den Feldwinkel $\phi s$ ersetzt, und mittels E2 Startwerte $i0^* \neq 0$ und $iM^* = 0$ für die Führungsgrößen $i\phi1^*$ und $i\phi2^*$ des Vektors $\underline{i\phi}^*$ vor-

gibt. Die mit dem Flußrechner, der Regeleinrichtung und der Start-Eingabeeinrichtung verbundenen Umsteuereinrich tung gibt zur Vorbereitung des Anlaufs der Maschine die Anfangsrichtung und die Startwerte frei und sperrt sie, um den Anlauf der Maschine auszulösen.

Dabei wird so vorgegangen:

a) In einem ersten Schritt wird bei stillstehender Maschine der Anfangswinkel $\phi MO^*$ vorgegeben, der die Richtung eines Modell-Flußvektors und einer dazu parallelen Achse $M\phi 1$ eines Modellkoordinatensystems bestimmt. Ferner werden die Führungsgrößen $iO^* \neq 0$ und $iM^* = 0$ vorgegeben, die somit einen zu $M\phi 1$ parallelen, mit $\underline{iO^*}$ bezeichneten Führungsvektor vorgegeben, der mittels eines aus dem Anfangswinkel abgeleiteten Transformationswinkels, nämlich dem Anfangswinkel $\phi MO^*$ selbst, in den Vektor $\underline{is^*}$, d.h. in ständerorientierte Steuergrößen für den Umrichter überführt wird. Während dieser Zeit ist der Netzschalter SWN geschlossen, so daß die Steuerelektronik an Spannung liegt, während der Umrichter selbst durch den geöffneten Schalter SWS noch gesperrt ist. Der erste Schritt endet mit Schließen von SWS, wodurch der Umrichter zur Erregung der Maschine freigegeben wird.

b) In einem zweiten Schritt wird der Umrichter nun mit den ständerorientierten Steuergrößen, die in diesem Schritt einen konstanten Stromvektor $\underline{is^*}$ bestimmen, gesteuert, so daß sich in der Maschine ein konstanter, durch die Richtung von $\underline{is} = \underline{iO^*}$ gegebener, in die Richtung von $M\phi 1$ bzw. $\phi MO^*$ zeigender Fluß aufbaut, für dessen wahren Feldwinkel $\phi 0$ aus entsprechenden, den Feldwinkel der Maschine festlegenden elektrischen Größen der Wert $\phi s$ errechnet wird. Dieser errechnete Feldwinkel $\phi s$ legt dann ein mit $M\phi 1$ und $M\phi 2$ zusammenfallendes Feldkoordinatensystem fest. (Fig. 2)

c) In einem letzten Schritt wird dann von dem Führungsvektor $\underline{i\phi^*}$ auf betriebsabhängig gebildete Führungsgrößen $i\phi 1^*$, $i\phi 2^*$ des Vektors $\underline{i\phi^*}$ umgeschaltet und die Führungsgrößen werden mittels des errechneten Feldwinkels $\phi s$ n die ständerorientierten Steuergrößen $\underline{is^*}$ für den Umrichter überführt. Die Maschine läuft dann im Normalbetrieb an.

Dieses Verfahren beseitigt die genannten Nachteile nur dann, wenn der Flußrechner den wahren Feldwinkel $\phi 0$ auch richtig in den errechneten Feldwinkel $\phi s$ abbildet. Dies ist jedoch nicht sichergestellt.

Die Erfindung sieht daher einen zumindest vor dem Anlauf aktivierbaren Regler vor, dem an seinem Istwerteingang der am Flußrechner abgegriffene Richtungswinkel $\phi s$ und am Sollwerteingang die von der Start-Eingaberichtung freigegebene Anfangsrichtung $\phi MO^*$ zuführbar sind und dessen Ausgangssignal zum Eingang des Flußrechners rückführbar ist, um bei der Errechnung des Richtungswinkels $\phi s$ korrigierend einzugreifen. Ferner sind Maßnahmen zur Steuerung des Umrichter-Ausgangsstromes vor dem Anlauf vorgesehen, durch die die Startwerte für die Führungsgrößen mittels des korrigierten Richtungswinkels in die ständerorientierten Steuergrößen transformiert werden.

Demnach wird also im zweiten Schritt der errechnete Feldwinkel $\phi s$ dem vorgegebenen Anfangswinkel $\phi MO^*$ durch Ausregeln der Winkelabweichung $\phi MO^* - \phi s$ nachgeführt und der errechnete Feldwinkel wird als Transformationswinkel für die Überführung der Führungsgrößen in die ständerorientierten Steuergrößen verwendet. Vorteilhafte Weiterbildungen dieses Verfahrens bzw. dieser Vorrichtung sind in den Unteransprüchen gekennzeichnet. Anhand von 11 Figuren wird die Erfindung näher erläutert.

Es zeigen:

Figur 1 und 2 die bereits erwähnte, aus dem Stand der Technik abgeleitete Vorrichtung und die Koordinatendarstellung des im zweiten Schritt fließenden Stromes,

Figur 3 und Figur 4 eine Vorrichtung und die dazugehörige Vektordarstellung des Stromes nach der Erfindung,

Figur 5 eine andere, vorteilhafte Ausführungsform der Vorrichtung,

Figur 6 und Figur 7 die Zeitsteuerung für die verwendete Umsteuereinrichtung und die gebildeten Signale,

Figur 8 einen Parameterregler,

Figur 9 die schematische Anwendung der Erfindung bei einem Direktumrichter,

Figur 10 und Figur 11 eine feldorientierte Regeleinrichtung für Umrichter mit einem Steuereingang für die Umrichterfrequenz.

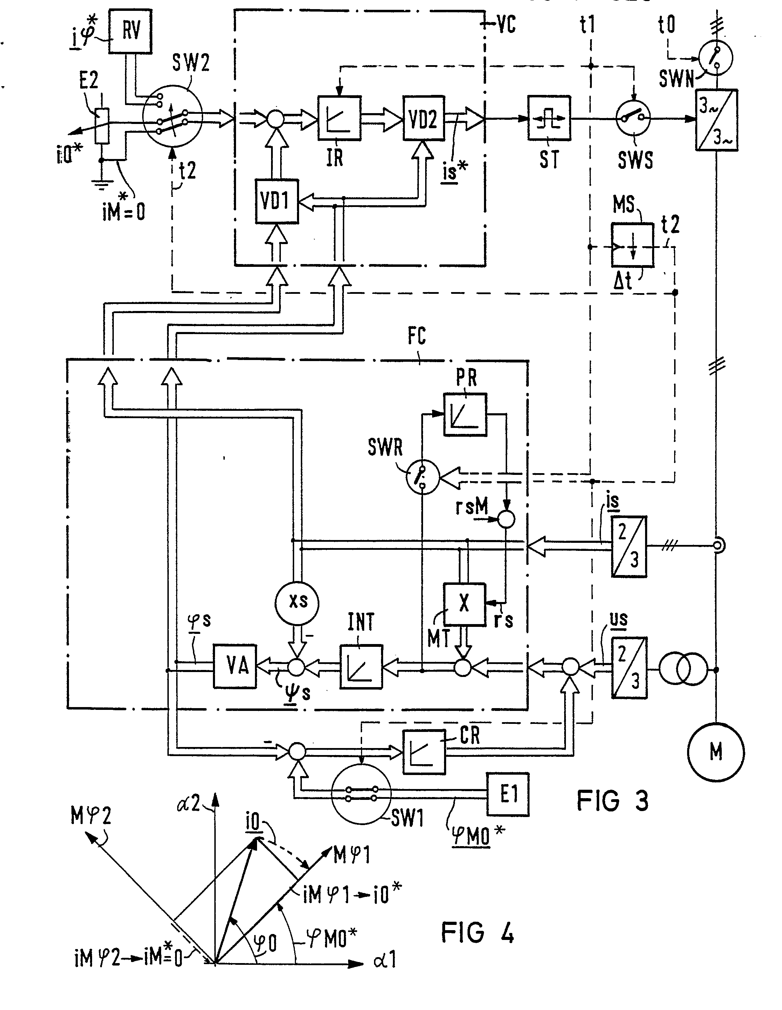

Bei der Vorrichtung nach Fig. 3 sind zunächst alle Schalter in der dargestellten Ruhestellung. Zum Zeitpunkt t0 wird der Netzschalter SWN eingeschaltet, während der Umrichter bei geöffnetem Schalter SWS gesperrt bleibt. Der Flußrechner FC erfaßt daher an seinen Eingängen für die elektrischen Größen den Wert Null, da ihm aber über eine Rückführungsleitung mit dem Regler CR die vektorielle Winkeldifferenz $\phi MO^* - \phi s$ zugeführt ist, steht am Ausgang des Flußrechners der errechnete Feldwinkel $\phi s = \phi MO^*$ an, wenn an der Eingabeeinrichtung E1 über den geschlossenen Schalter SW1 der Winkel $\phi MO^*$ abgegriffen wird. Dieser Winkel legt die Achsen $M\phi 1$ und $M\phi 2$ nach Figur 4 fest.

Im Gegensatz zum Stand der Technik ist der errechnete Winkel $\phi s$ der feldorientierten Regeleinrichtung VC zugeführt, so daß der an der Einstelleinrichtung E2 mittels des Schalters SW2 abgegriffene Vektor $\underline{iO^*}$ im $M\phi 1$, $M\phi 2$-System die Kom-

ponenten $iM\phi1^* = i0^*$ und $iM\phi2^* = iM^* = 0$ besitzt, also die zum Zeitpunkt $t = t0$ durch $\phi s = \phi M0^*$ gegebene Richtung $M\phi1$ und den Betrag $i0^*$ aufweist.

Durch Schließen von SWS kann ein geschlossener Regelkreis mit einem stationären Zustand erreicht werden, bei dem der Ständerstrom is durch Ausregeln (Stromregler IR) seiner ins $M\phi1$, $M\phi2$ - System transformierten Komponenten (Vektordreher VD1) gleich dem Vektor $i0^*$ ist, wobei die den Regeldifferenzen der Komponenten entsprechenden Ausgangssignale des Stromreglers nach ihrer Rücktransformation ins Ständerbezugssystem die Komponenten des Steuervektors is* darstellen.

Während des ersten Schrittes ist allerdings der Regelkreis nicht geschlossen (Schalter SWS geöffnet), der Umrichter und der Ständerstrom also gesperrt (is = 0). Der Stromregler liefert daher Maximalausschlag oder er ist durch ein Inaktivierungssignal auf dem Ausgangswert Null gehalten. Wird im letzteren Fall der Regler zum Zeitpunkt t1 freigegeben und durch Schließen von SWS der Umrichter mit den durch is* gegebenen Zündwinkel-Einstellungen gezündet, so fließt der Ständerstrom is mit einer durch $\phi M0^*$ gegebenen Richtung und einem auf i0 hochlaufenden Betrag.

Es ist häufig einfacher, beim Schließen von SWS im Umrichter eine fest vorgegebene Kombination von Thyristoren zu zünden. In diesem Fall oder wenn der Stromreglerausgang einen Steuervektor is* $\neq$ 0 beim Zeitpunkt der Umrichterzündung hervorruft, beginnt zunächst ein beliebiger Ist-Ständerstrom i0 zu fließen, der erst im Verlauf des zweiten Schrittes auf i0 = i0* eingeregelt wird. Dies ist in Fig. 4 dargestellt, wobei hier der Übersichtlichkeit wegen ein beliebiger Anfangswinkel $\phi M0^*$ angenommen ist. In der Praxis wird man vorteilhaft $\phi M0^* = 0$ wählen, d.h. das Modell-Koordinatensystem $M\phi1$, $M\phi2$ fällt mit dem Ständerkoordinatensystem $\alpha1$, $\alpha2$ zusammen.

Im zweiten Schritt, bei dem nun wegen des fließenden Stromes in der Drehfeldmaschine ein Fluß entsteht, der zum fließenden Strom wegen des Stillstands der Maschine parallel ist, errechnet nun der Flußvektor einen Flußwinkel $\phi s$, der somit anfangs nicht zwangsläufig mit $\phi M0^*$ zusammenfällt. Er entspricht anfangs auch nicht dem wahren Flußwinkel $\phi0$, vielmehr wird er durch die Wirkung des Reglers CR dem Wert $\phi M0^*$ nachgeführt ( $\phi s - \phi M0^* \rightarrow 0$). Da dieser nachgeführte Winkel $\phi s$ im erwähnten stationären Zustand des geschlossenen Stromregelkreises gleich der Richtung der Vektoren is* bzw. is ist, nimmt wegen der Parallelität von Strom und Fluß bei Maschinenstillstand der wahre Feldwinkel $\phi0$ am Ende des zweiten Schrittes den Wert $\phi s \rightarrow \phi M0^*$ an.

Nunmehr kann zum Zeitpunkt t2, z.B. nach Ablauf einer an einer monostabilen Kippstufe eingestellten Vorbereitungszeit $\Delta t$, durch Umlegen der Schalter SW1 und SW2 wie beim Stand der Technik auf den Normalbetrieb übergegangen werden, bei dem der Strom entsprechend den betriebsabhängig vom Sollwertgeber RV vorgegebenen Führungsgrößen gesteuert wird und die Maschine anläuft.

Prinzipiell ist während des zweiten Schrittes nur die vom Regler CR bewirkte Nachführung des Transformationswinkels $\phi s$, nicht aber eine Stromregelung, d.h. ein Regelvergleich der Stromkomponenten, erforderlich. z.B. können dem Vektordreher VD2 statt der IR-Ausgangssignale direkt die Führungsgrößen i0* und iM* = 0 vorgegeben werden (gesteuerter Betrieb).

Sieht man von transienten Zuständen ab und betrachtet nur die Grundschwingungen, so steht der EMK-Vektor senkrecht auf dem Flußvektor. Während des zweiten Schrittes wird daher die in die Richtung $\phi M0^*$ der Achse $M\phi1$ zeigende Komponente $eM\phi1$ des EMK-Vektors den Wert Null annehmen müssen, wobei außerdem wegen des Stillstands der Maschine kein induktiver Anteil der EMK mehr auftritt. Für die im Flußrechner aus Strom, Spannung und dem Maschinenparameter rs berechnete EMK ergibt sich daher eine Bedingung, die nur bei Verwendung des richtigen Parameterwertes erfüllt und daher zum Identifizieren und Nachstellen des Ständerwiderstandsparameters verwendet ist. Setzt man insbesondere $\phi M0^* = 0°$, also $eM\phi1 = e\alpha1$, so ergibt sich dadurch

$$u\alpha1 - rs \cdot i\alpha1 = 0,$$

und gemäß Fig. 3 wird im zweiten Schritt durch Schließen des Schalters SWR die entsprechende EMK-Komponente am Eingang des Integrators INT abgegriffen und einem Parameterregler PR zugeführt. Mit der Regler-Ausgangsgröße wird ein voreingestellter Schätzwert rsM solange korrigiert, bis der dadurch entstehende Verstärkungsfaktor rs am Multiplizierglied MT des Flußrechners den die Ständerspannung us kompensierenden Ständerspannungsabfall $rs \cdot is$ liefert.

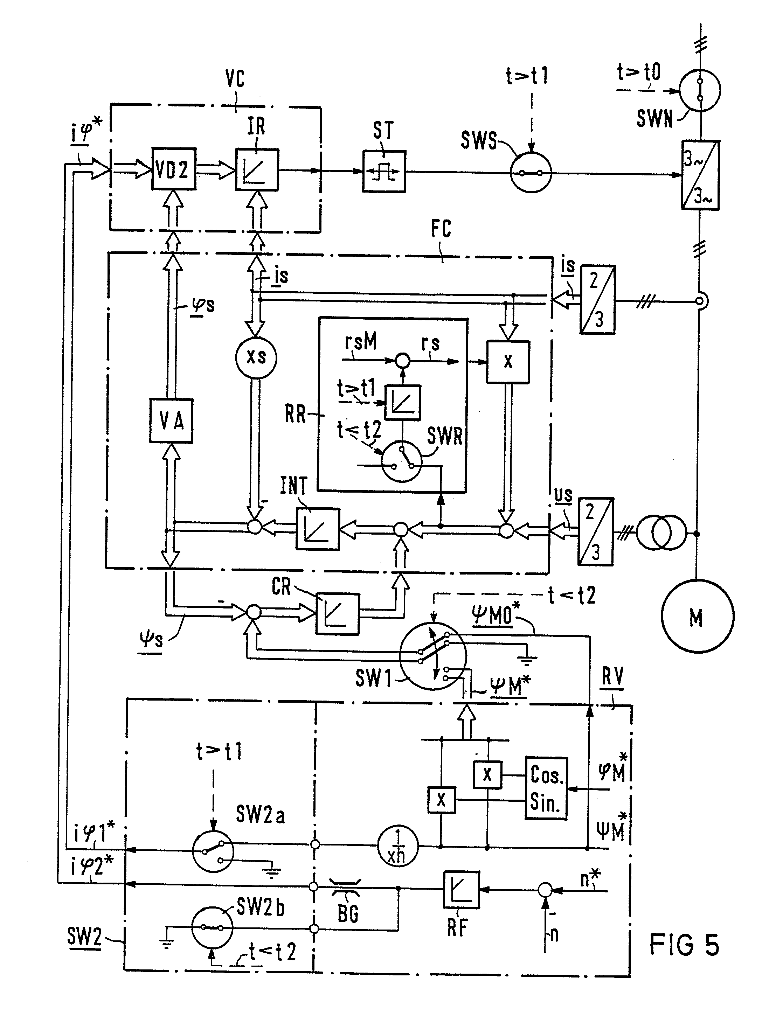

Dies ist eine besonders einfache Ausnutzung der Tatsache, daß im Fall einer stillstehenden, vom Gleichstrom gespeisten Asynchronmaschine in der Flußgleichung $\phi s = \int(us - rs.is)dt - xs \cdot is$ der Integrand Null werden muß. In Figur 5 ist diese nur während des zweiten Schrittes wirksame Regelung als Block RR dargestellt.

Abweichend von Fig. 4 ist vorgesehen, daß die feldorientierte Regeleinrichtung VC im Ständerkoordinatensystem arbeitet, d.h. der Führungsvektor $i\phi^*$ wird im gezeigten Fall mittels des Vektordrehers VD2 und des den Transformationswinkel $\phi s$ darstellenden Transformationsvektors $\phi s$ ins Ständerkoordinatensystem überführt. In diesem Koordinatensystem regelt dann die Stromregelung die Ständerkomponenten aus, sie braucht daher im einfachsten Fall außer zwei Stromkomponenten-Reglern nur einen 3/2-Wandler enthalten, um die Steuergrößen für den Steuer-satz ST zu liefern.

Während nach den Figuren 3 und 4 nur der Richtungsvektor für den errechneten Feldwinkel $\phi s$ = arc tan $(\psi\alpha2/\psi\alpha1)$ dem entsprechenden Vektor $\phi M0^*$ für die durch $\phi M0^*$ gegebene Achse $M\phi1$ nachgeführt wird, zeigt Fig. 5, daß vorteilhaft auch der zum errechneten Flußvektor $\psi s$ gehörende Betrag einem vorgegebenen Betrag $\psi M^*$ für den Modell-Flußvektor nachgeführt wird. Der Modellflußvektor kann' also im Ständerkoordinatensystem durch die beiden kartesischen Komponenten $\psi M^*$ . cos $\phi M0^*$und $\psi M^*$.sin $M0^*$ vorgegeben werden, wobei vorteilhaft $\phi M0^*$ = 0° gesetzt wird. Der Regler CR regelt dann die Regelabweichung der Vektorkomponenten.

Vorteilhaft wird ferner dieser Betrag $\psi M^*$ gleich dem auch für den betriebsmäßigen Anlauf vorgesehenen Sollwert des Flusses gesetzt. Wird dann entsprechend der Hauptfeldinduktivität $xh$ die im zweiten Schritt benötigte Führungsgröße $i0^*$ zu $\psi M^*/xh$ gewählt, so ist einer-seits im zweiten Schritt der Sollwert für den den Fluß aufbauenden Ständerstrom an den vom Flußrechner erfaßten Fluß angepaßt und die Ausgänge der Integratoren INT sind nicht nur bezüglich ihres Quotienten, sondern auch be-züglich ihrer einzelnen Amplituden auf den richtigen Wert gesetzt. Wenn zweitens im zweiten Schritt die Maschine angelassen wird, so steht die Führungsgröße $i\phi1^*$, die den Fluß der Maschine bestimmt, bereits auf dem richtigen Wert. Wenn nun die Führungsgröße $i\phi2^*$ am Ausgang eines Frequenzreglers RF für die Regelabweichung der mechanischen Läuferfrequenz, der Ständerfrequenz oder der Flußfrequenz über einen Hochlaufgeber oder eine andere, die Anstiegsgeschwindigkeit begrenzende Einrichtung BG freigegeben wird, erfolgt keine sprunghafte Änderung an den Ausgängen der Stromregelung IR und der Integratoren INT.

Hierzu sind als Schalter SW2 zwei Einzelschalter SW2a und SW2b vorgesehen, die während des ersten Schrittes die beiden Führungsgrößen des Vektors $i\phi^*$ auf dem Wert Null halten. Bei geöffnetem Schalter SWS (nicht-erregte Maschine) ist also die Stromregelung IR nicht aktiv. Im zweiten Schritt wird dann zwar der Schalter SW2a umgelegt und gibt den aus der Flußbetrag-Führungsgröße $\psi M^*$ abgeleiteten Wert $i\phi1^*$ = $\psi M^*/xh$ frei, der Einzelschal-ter SW2b setzt jedoch $i\phi2^*$ nach wie vor auf den Wert Null.

Im dritten Schritt, bei dem nun der Frequenzregler RF und der Hochlaufgeber BG freigegeben wird, ist ferner vorteilhaft vorgesehen, den Modellvektor $\psi M0^*$ dadurch außer Eingriff zu bringen, daß der Schalter SW1 auf einen Eingang für einen Fluß-Führungsvektor $\psi M^*$ umgeschaltet wird. Der Betrag dieses Führungsvektors $\psi M^*$ ist wieder aus dem bereits für den zweiten Schritt vorgegebenen Wert $\Psi M^*$ gebildet, jedoch wird hier davon ausgegangen, daß auch ein durch Betriebsparameter vorgegebener Führungswinkel $\phi M^*$ zur Verfügung steht, der den Mittelwert des wahren Flußwinkels hinreichend genau wiedergibt. Im Ständerkoordinatensystem wird daher der Fluß-Führungsvektor $\psi M^*$ durch seine Komponenten $\psi M^*$ . cos $\phi M^*$ und $\psi M^*$ . sin $\phi M^*$ gebildet.

Dadurch können Nullpunktabweichungen, die während des Anlaufes durch eine Drift der Integratoren oder andere Störungen entstehen, ausgemittelt werden. Der Flußrechner FC ist also durch $\psi M^*$ bezüglich des langfristigen Mittelwertes für den errechneten Flußvektor $\psi s$ auf $\psi M^*$ ausgeregelt, er stellt jedoch für rasche dynamische Änderungen der feldorientierten Regeleinrichtung VC einen entsprechend rasch sich ändernden Transformationswinkel zur Verfügung.

Eine ähnliche Umschaltung nimmt auch der Schalter SWR vor, der dem Parameterregler PR während der zweiten Phase die Regelabweichung $u\alpha1$ - $rs$ . $i\alpha1$ und im zweiten Schritt eine aus anderen Betriebsgrößen gebildete Regelabweichung zur Korrektur des Ständerstromwiderstandes $rs$ zuführen kann.

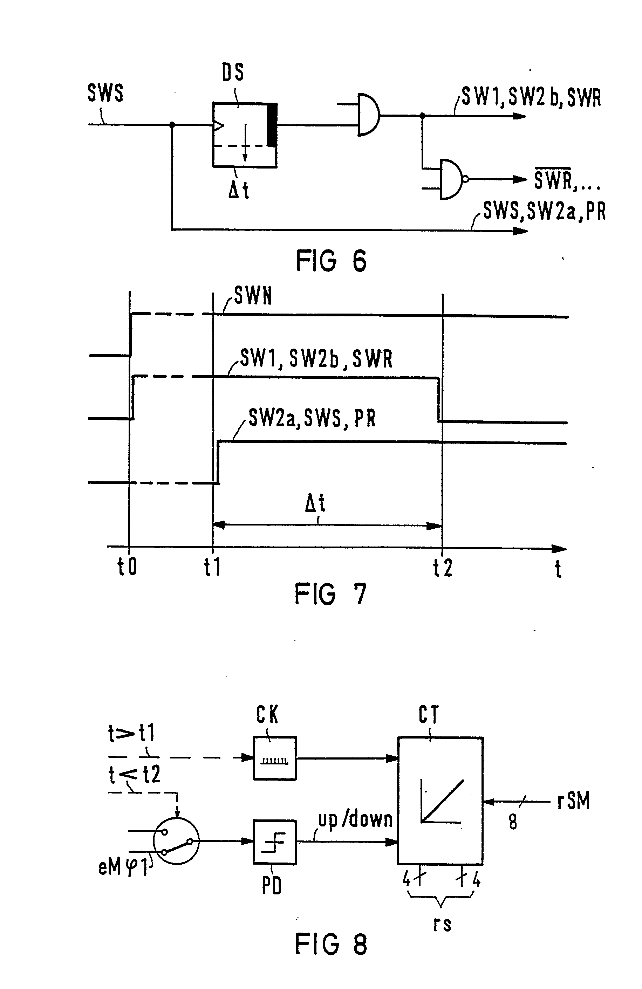

In Figur 5 ist bei den gezeigten Schalterstellungen jeweils angegeben, in welchen Zeiten sie über ihre Ansteuersignale in dieser Stellung gehalten sind. Dies wird durch eine Zeitsteuerung nach Fig. 6 und deren in Fig. 7 gezeigten Ausgangssignale erreicht. Der Zeitpunkt t0, bei dem durch Schließen von SWN die Versorgungsspannung von Umrichter und Elektronik eingeschaltet und gleichzeitig ein dynamischer Speicher DS gesetzt wird, sowie der Zeitpunkt t1, bei dem durch Schließen von SWS der Umrichter angelassen wird, sind jeweils durch externe Bedienungssignale vorgegeben. Der dynamische Speicher DS behält nach Ansteuerung mit der Schaltflanke des Schaltsignals für SWS seinen Zustand noch für die Vorbereitungszeit $\Delta t$ bei und löst somit erst zum Zeitpunkt t2 = t1 + $\Delta t$ die Freigabe der betriebsmäßig vorgegebenen Führungsgrößen für $i\phi^*$ aus. Dabei kann z.B. bei Mehrmotoren-Antrieben vorgesehen sein, das Ausgangssignal erst bei Auftreten eines externen Freigabesignals endgültig freizugeben.

Die Widerstandsregelung RR kann vorteilhaft gemäß Fig. 8 einen digitalen Integrator (Zähler CT) enthalten, der im ersten Schritt auf den geschätzten Widerstandsparameter rsM gesetzt ist.

Zum Zeitpunkt t1 werden die Impulse eines Taktgebers CK (z.B. etwa 50 Hz) freigegeben und von dem Zähler CT gezählt, wobei gemäß der Bedingung eM $\phi$1 = 0 vorteilhaft von einem Polaritätsdetektor PD das Signal sign (u$\alpha$1-rs . i$\alpha$1) auf den Vorwärts/Rückwärts-Eingang des Zählers CT gegeben wird.

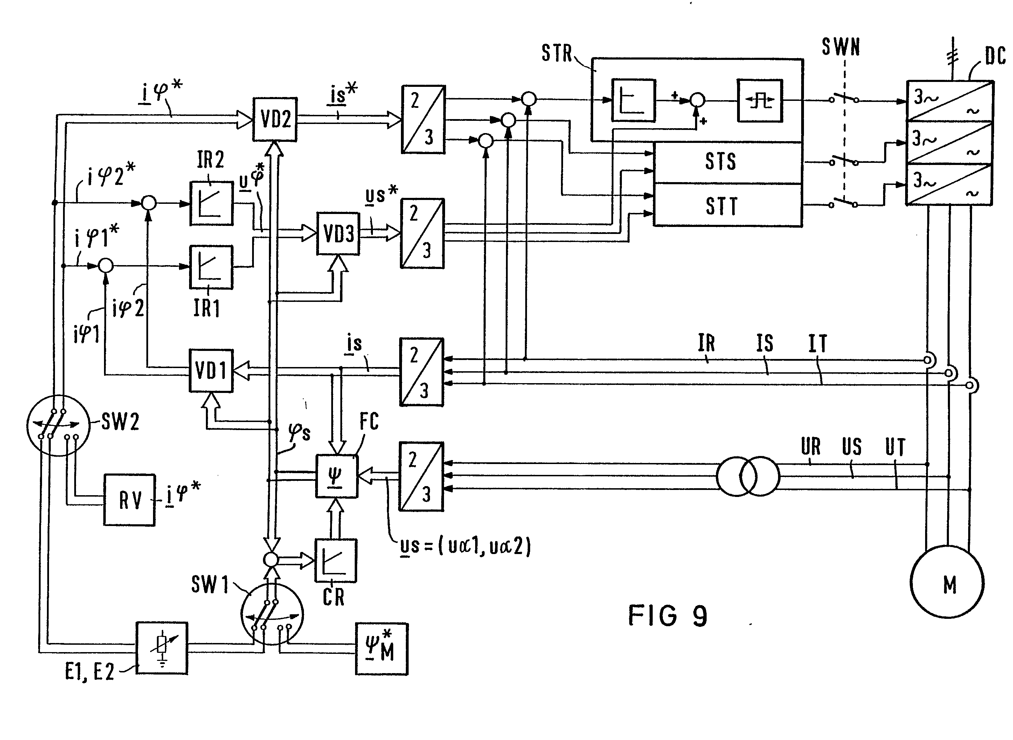

Die folgenden Figuren 9 bis 11 zeigen die Anwendung der Erfindung für verschiedene Umrichtertypen. So kann z.B. zur Speisung eines Direktumrichters DC gemäß Figur 9 im Feldkoordinatensystem mittels der Stromkomponenten-Regler IR1 und IR2 ein Spannungs-Sollvektor u$\phi$ * gebildet werden, der zusammen mit dem Sollvektor i$\phi$ * ins Ständerkoordinatensystem transformiert wird, wobei beide Vektoren in entsprechende Spannungs-und Strom-Sollwerte für die Umrichter-Ausgangsphasen überführt werden. Die den einzelnen Phasen zugeordneten Steuersätze STR, STS und STT überlagern den Spannungssollwert einem aus der Regelabweichung des Phasenstroms gebildeten Korrektur-wert, um sicherzustellen, daß der Direktumrichter jeweils diejenige Phasenspannung liefert, bei der sich der Phasenstrom möglichst verzögerungsfrei auf die Sollwerte einstellt, die durch die Führungsgrößen i$\phi$1* und i$\phi$2* vorgeschrieben sind. Dadurch ist die für die Feldorientierung typische Entkopplung gewährleistet, bei der die feldparallele und senkrechte Komponente des Ist-Stromsystems durch entsprechende Sollwerte i$\phi$1* und i$\phi$2* unabhängig voneinander eingestellt werden können.

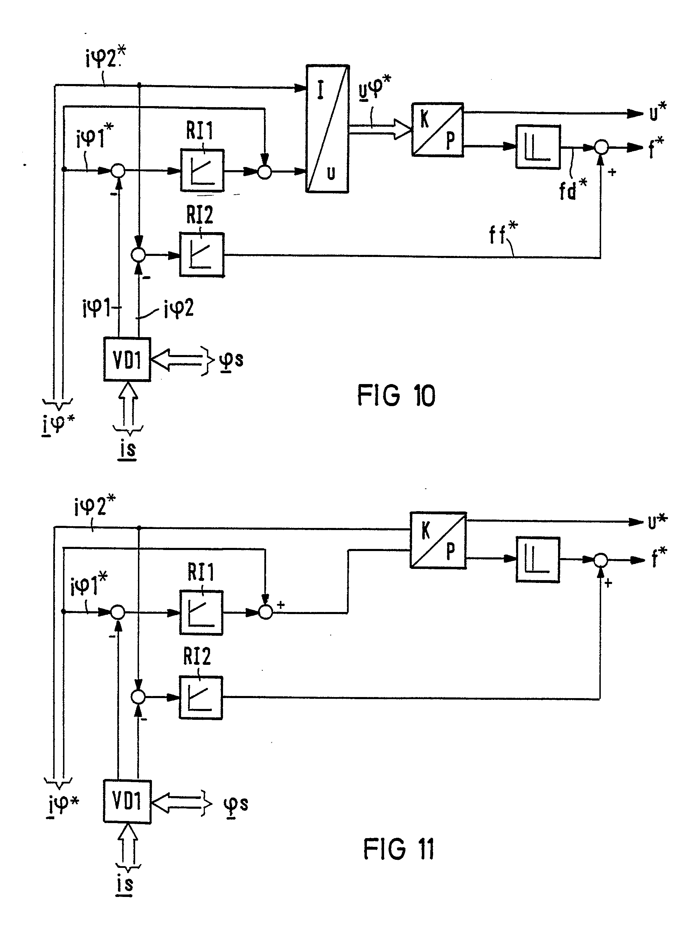

Für spannungseinprägende Umrichter mit einem Eingang für eine Frequenzsteuergröße f* und eine Amplitudensteuergröße U* kann die in Figur 10 gezeigte feldorientierte Regeleinrichtung verwendet werden, bei der die gewünschte Entkopplung durch ein Entkopplungsnetzwerk I/U erreicht wird, das den Sollspannungsvektor u $\phi$* aus dem mit dem Sollwert i$\phi$1* vorgesteuerten Ausgangssignal des Reglers RI1 und der Führungsgröße i$\phi$2* errechnet wird. Ein kartesisch/polarer Koordinatenwandler bildet die Betragskoordinate U* als Amplitudensteuergröße, während aus der Winkelkoordinate mittels eines Differenzierers eine jede rasche Änderung des Sollvektors erfassende dynamische Frequenz fd* gebildet wird. Mit dieser dynamischen Frequenz wird der Frequenzwert ff* korrigiert, der an einem Regler RI2 für die feldsenkrechte Stromkomponente abgegriffen ist. Da nämlich durch die Amplitudensteuergröße U* die Stromamplitude praktisch bereits ausgeregelt ist, regelt RI2 somit die Phase des Stromsystems, die Rege-lung arbeitet also sozusagen in einem polaren Feldkoordinatensystem.

Wird ein stromeinprägender Umrichter mit einem Frequenzsteuereingang benutzt, so kann ein Entkopplungsnetzwerk entfallen (Figur 11).

Bezüglich des Vektordrehers VD1 (Transformation ins Feldkoordinatensystem) sei auf Fig. 5 verwiesen, wonach die auszuregelnde Vektordifferenz des Stromes nicht im Feldkoordinatensystem ausgeführt werden muß.

**Ansprüche**

1. Verfahren zum Betrieb einer feldorientierten, von einem steuerbaren Umrichter (INV) gespeisten Drehfeldmaschine (M), wobei

a) in einem ersten Schritt (t≤t1) bei stillstehender Maschine ein Anfangswinkel ($\phi$MO*) für einen zu einem Modell-Flußvektor ($\psi$MO*) parallele Achse (M$\phi$1) eines Modell-Koordinatensystems und die Führungsgrößen (i0*, iM* = 0) für einen zu dieser Achse parallelen Führungsvektor vorgegeben werden, der Führungsvektor mittels eines aus dem Anfangswinkel abgeleiteten Transformationswinkels ($\phi$s) in ständerorientierte Steuergrößen (is*) für den ständerorientierten Ständerstromvektor (is) überführt wird und der Um-richter zur Erregung der Maschine freigegeben wird,

b) in einem zweiten Schritt der Umrichter mit den ständerorientierten Steuergrößen gesteuert und aus elektrischen Größen (is, us) der Maschine, die den Feldwinkel ($\phi$0) der Maschine festlegen, ein errechneter Feldwinkel ($\phi$s) eines Feldkoordinatensystems gebildet wird, und

c) in einem letzten Schritt (t>t2) von den Start-Führungsgrößen (i0*, iM*) auf betriebsabhängig gebildete Führungsgrößen (i$\phi$*) für die Komponenten des Ständerstroms im Feldkoordinatensystem umgeschaltet wird und die Führungsgrößen mittels des errechneten Feldwinkels ($\phi$s) in die ständerorientierte Steuergrößen für den Umrichter überführt werden,

**dadurch gekennzeichnet,** daß im zweiten Schritt der errechnete Feldwinkel dem vorgegebenen Anfangswinkel ($\phi$MO*) durch Ausregeln seiner Winkelabweichung nachgeführt wird und der errechnete Feldwinkel als Transformationswinkel ($\phi$s) für die Überführung der Führungsgrößen in die ständerorientierten Steuergrößen verwendet wird.

2. Verfahren nach Anspruch 1, **dadurch gekennzeichnet,** daß im zweiten Schritt dem Ständerstromvektor durch eine Stromregelung die Richtung des errechneten Feldwinkels eingeprägt wird.

3. Verfahren nach Anspruch 1 oder 2, **dadurch gekennzeichnet,** daß im ersten Schritt der Umrichter unabhängig vom Wert der ständerorientierten Steuergröße freigegeben wird.

4. Verfahren nach einem der Ansprüche 1 bis 3, **dadurch gekennzeichnet,** daß im ersten Schritt den Führungsgrößen für den Ständerstromvektor eine dem Sollwert des Flußvektors beim Anlauf der Ma-schine entsprechender Betrag des Ständerstromvektors vorgegeben wird und daß im zweiten Schritt aus den elektrischen Größen auch ein Flußbetrag bestimmt und dem Sollwert des Flußvektors nachgeführt wird.

5. Verfahren nach einem der Ansprüche 1 bis 4, **dadurch gekennzeichnet,** daß im zweiten Schritt aus den elektrischen Größen und einem Maschinenparameter (rs) ein Vektor für die EMK der Maschine und aus diesem EMK-Vektor der Feldwinkel errechnet wird, und daß im zweiten Schritt der Maschinenparameter verändert wird, bis die zum vorgegebenen Anfangswinkel parallele Komponente des EMK-Vektors Null wird.

6. Vorrichtung zum Betrieb einer mittels eines Umrichters (INV) gespeisten Drehfeldmaschine (M), mit

a) einem Flußrechner (FC), der aus elektrischen Meßwerten (us, is) der Maschine den Feldwinkel ($\phi$s) der Maschine, der die Richtung einer Achse eines kartesischen Feldkoordinatensystems (M$\phi$1, M$\phi$2) festlegt, errechnet,

b) einer Regeleinrichtung (VC) mit einem Eingabeeingang für den Feldwinkel ($\phi$s), Mitteln zu Vorgabe von Führungsgrößen (i$\phi$*) für die Komponenten des Ständerstromvektors im Feldkoordinatensystem und einer Transformationseinrichtung (VD1, VD2), die aus den Führungsgrößen und dem Feldwinkel ständerorientierte Steuergrößen (is*) für den Umrichter liefert,

c) einer Start-Eingabeeinrichtung (E1, E2), an der eine Anfangsrichtung ($\phi$M0*) für den Flußvektor der Drehfeldmaschine und Startwerte (i0*, iM* = 0) für die Führungsgrößen abgreifbar sind, und

d) einer mit dem Flußrechner, der Regeleinrichtung und der Starteingabeeinrichtung verbundenen Umsteuereinrichtung (SW1, SW2), die die Anfangsrichtung ($\phi$M0*) und die Startwerte (iM* = 0) zur Vorbereitung des Anlaufs freigibt und zum Anlauf der Maschine sperrt,

**gekennzeichnet durch**

e) einen zumindest vor dem Anlauf aktivierbaren Regler (CR), dessen Istwerteingang der am Flußrechner abgegriffene Feldwinkel ($\phi$s) und dessen Sollwerteingang die von der Start-Eingabeeinrichtung (E1) freigegebene Anfangsrichtung zuführbar sind und dessen Ausgangssignal als Korrekturgröße bei der Errechnung des Feldwinkels zum Eingang des Flußrechners (FC) rückgeführt ist und

f) Mittel zur Steuerung des Umrichter-Ausgangsstromes vor dem Anlauf, die die Startwerte der Führungsgrößen mittels des korrigierten Feldwinkels in die ständerorientierten Steuergrößen transformieren.

7. Vorrichtung nach Anspruch 6, **dadurch gekennzeichnet,** daß der Flußrechner (FC) eine Rechenschaltung zur Bildung des EMK-Vektors der Maschine aus Spannung und Strom der Ständerwicklung und einem einstellbaren Maschinenparameter (rs), zwei Integratoren (INT) für die Komponenten des EMK-Vektors, an denen die ständerorientierten kartesischen Komponenten des Flußvektors abgegriffen sind, und einen Nullpunktregler (PR) enthält, der die in Anfangsrichtung weisende Komponente des EMK-Vektors durch Verändern der Einstellung des Maschinenparameters zu Null regelt.

86 P 3287

FIG 1

FIG 2

86 P 3287

FIG 3

FIG 4

FIG 5

FIG 6

FIG 7

FIG 8

FIG 9

$\underline{u}s = (u\alpha 1, u\alpha 2)$

0 257 396

86 P 3287

FIG 10

FIG 11

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl.4) |
|---|---|---|---|
| D,A | EP-A-0 015 501 (FUJI) <br> * Zusammenfassung; Figur 1; Anspruch * <br> --- | 1 | H 02 P 7/62 <br> H 02 P 1/26 |
| A | EP-A-0 161 616 (SIEMENS) <br> --- | | |
| A | DE-A-3 144 188 (FUJI) <br> ----- | | |

RECHERCHIERTE SACHGEBIETE (Int. Cl.4)

H 02 P

Der vorliegende Recherchenbericht wurde für alle Patentansprüche erstellt

| Recherchenort | Abschlußdatum der Recherche | Prüfer |
|---|---|---|
| DEN HAAG | 11-11-1987 | KOLBE W.H. |